(19) **Europäisches Patentamt**

**European Patent Office**

**Office européen des brevets**

(11) **EP 0 829 163 B1**

(12) **EUROPEAN PATENT SPECIFICATION**

(45) Date of publication and mention
of the grant of the patent:
**07.08.2002 Bulletin 2002/32**

(21) Application number: **97905352.7**

(22) Date of filing: **13.03.1997**

(51) Int Cl.⁷: $H04N\ 1/41$

(86) International application number:
**PCT/IB97/00252**

(87) International publication number:
**WO 97/36419 (02.10.1997 Gazette 1997/42)**

(54) **METHOD AND ARRANGEMENT FOR ENCODING AND DECODING IMAGES**

VERFAHREN UND VORRICHTUNG ZUR KODIERUNG UND DEKODIERUNG VON BILDERN

PROCEDE ET SYSTEME DE CODAGE ET DE DECODAGE D'IMAGES

(84) Designated Contracting States:
**DE ES FR GB IT SE**

(30) Priority: **28.03.1996 EP 96200834**

(43) Date of publication of application:
**18.03.1998 Bulletin 1998/12**

(60) Divisional application:
**01203586.1 / 1 202 576**

(73) Proprietors:
• **Koninklijke Philips Electronics N.V.**
**5621 BA Eindhoven (NL)**
Designated Contracting States:
**DE ES FR GB IT SE**
• **Philips Aktiebolag**
**164 85 Stockholm (SE)**
Designated Contracting States:
**SE**

(72) Inventors:
• **BREEUWER, Marcel**
**NL-5656 AA Eindhoven (NL)**
• **KLEIN GUNNEWIEK, Reiner, Bernardus, Maria**
**NL-5656 AA Eindhoven (NL)**

(74) Representative: **Schmitz, Herman Jan Renier et al**
**INTERNATIONAAL OCTROOIBUREAU B.V.,**
**Prof. Holstlaan 6**
**5656 AA Eindhoven (NL)**

(56) References cited:
**EP-A- 0 734 168**     **US-A- 267 333**
**US-A- 5 014 198**     **US-A- 5 212 565**
**US-A- 5 422 964**

EP 0 829 163 B1

**Description**

FIELD OF THE INVENTION

The invention relates to a method of encoding images including areas of relevant image data and areas of irrelevant image data, comprising the step of identifying said irrelevant image data. The invention also relates to a method of decoding encoded images and corresponding arrangements for encoding and decoding.

BACKGROUND OF THE INVENTION

Video images usually have a rectangular shape, but the user is not always interested in the whole rectangular image area. For example, medical images often comprise medically relevant information in a circular area. The images thus exhibit a sharp transition between this circular area and an irrelevant (usually black) background. German Patent DE-A-36 13 759 discloses a method of recording such images. Data compression is herein achieved by omitting the pixels of the irrelevant image areas. The boundary between the relevant image area and the irrelevant image area is known in advance to both the transmitter and the receiver. The receiver thus knows for each received pixel its display position on the screen.

Currently, video images are often encoded and compressed by encoding methods such as block transform coding or DPCM which exploit the correlation between contiguous pixels within an image. In such encoding methods, sharp transitions between contiguous pixels require a large number of bits. The boundaries between relevant and irrelevant areas in the above-mentioned types of images thus affect the coding efficiency considerably.

US-A- 5 267 333 discloses an image compressing apparatus that forms a synthetic image from a plurality of image data. The apparatus includes a device for sorting a plurality of image data into a plurality of image types in accordance with at least one of a nature and a use of each image data, a device for selecting an image compressing method out of a plurality of predetermined various image compressing methods for each image data in accordance with the sorted image type, and a device for compressing the image data in accordance with the selected image compressing method and recording the compressed image data in a recording medium. Further, this document discloses: sorting a plurality of image data into a pictorial part and a total background image; distinguishing an object image from a component background image in the pictorial parts and forming a region information which indicates whether each pixel in the pictorial parts belongs to the object image or the component background image.

OBJECT AND SUMMARY OF THE INVENTION

It is an object of the invention to provide a method of encoding images by which the coding efficiency is improved.

The method according the invention is characterized by replacing at least irrelevant image data next to a boundary between said areas by pseudo-image data smoothing the transition between relevant and irrelevant image data. Experiments have shown that medical images can now be encoded at a 30% lower bit rate.

The corresponding method of decoding images is characterized by identifying pseudo-image data in response to boundary information and replacing said pseudo-image data by predetermined image data. The sharp boundaries between areas of relevant image data and areas of predetermined image data are thus reconstructed. The reconstructed image has the same appearance as the original image which a medical specialist is used to seeing.

BRIEF DESCRIPTION OF THE DRAWINGS

Fig.1 shows a diagram of a system adapted to encode and decode video images according to the invention.

Figs.2A-2E show signal waveforms illustrating the operation of embodiments of a modifying circuit shown in Fig.1.

Figs. 3A-3C show image areas further illustrating the operation of a particular embodiment of the modifying circuit shown in Fig.1.

**DESCRIPTION OF PREFERRED EMBODIMENTS**

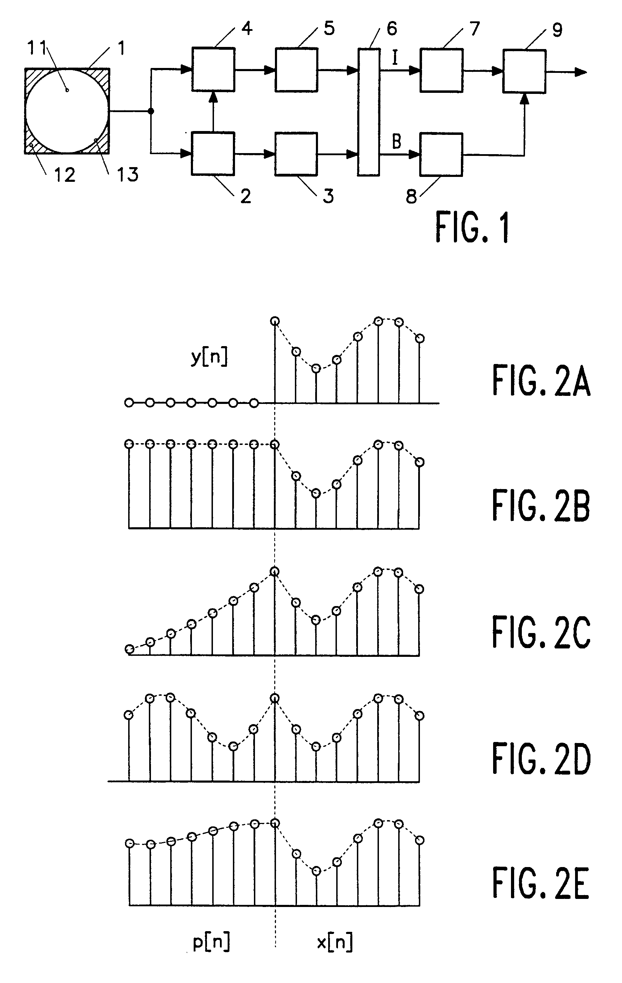

Fig.1 shows a diagram of a system for encoding and decoding video images according to the invention. Reference numeral **1** denotes a rectangular image to be encoded. As has been attempted to show in Fig. 1, the image comprises a circular image area **11** of relevant pixels and an image area **12** of irrelevant pixels. The boundary between both areas is denoted by the reference numeral **13.** Hereinafter, relevant pixels will be denoted by x[i,j] and irrelevant pixels will be denoted by y[i,j]. Pseudo-pixels will be denoted by p[i,j].

The image is applied to a boundary detection circuit **2** which is adapted to detect boundary **13,** e.g. detect abrupt transients from (black) pixels having a background value to relevant pixels and *vice versa*. A practical embodiment of boundary circuit **2** is disclosed in US patent 5,014,198. Boundary **13** is losslessly encoded by a boundary encoding stage **3** and transmitted or recorded. Lossless encoding methods are known in the art. For example, run-length coding can be applied to a mask defining the area of irrelevant pixels. If the area of relevant pixels is circular, only the centre and radius of a circle need to be transmitted. Boundary detection circuit **2** and encoding stage **3** can be omitted if the boundaries are known in advance.

Image **1** is further applied to a modifying circuit **4.** This circuit receives boundary information from boundary detection circuit **2** and determines, in response thereto, whether applied pixels are relevant pixels from area **11** or irrelevant pixels from area **12.** Irrelevant pixels are modified, as will be described hereinafter. The pixels are subsequently applied to a conventional image encoder **5,** for example a block-based transform encoder or a DPCM encoder. The encoded boundary information B and image information I are stored on a storage medium for later retrieval, or transmitted to a remote receiver. The storage or transmission medium is denoted by reference numeral **6.**

Embodiments of modifying circuit **4** will now be described in terms of their respective output signals. Practical circuits can easily be designed by those skilled in the art of digital signal processing. Figs.2A-2E show waveforms of the respective signals. For convenience, one-dimensional signals are shown, but it will be appreciated that the modifying operation is preferably applied in the two-dimensional image space. Fig.2A shows the input signal for reference. It comprises a series of irrelevant pixels y[n] and a series of relevant pixels x[n]. The background of the image is here assumed to be black, hence all pixels y[n] have the value of zero. Figs.2B-2E show suitable output signals of the modifying circuit. The respective signals now comprise a series of pseudo-pixels p[n] and the series of relevant pixels x[n].

The waveform shown in Fig.2B is obtained by replacing the irrelevant pixels y[n] by identical pseudo-pixels p[n], the value of which corresponds to the first relevant pixel x[n] beyond the boundary. In the waveform shown in Fig.2C, the pseudo-pixels p[n] are chosen to gradually vary from their original value zero to the value of the first relevant pixel beyond the boundary. In the waveform of Fig.2D, the relevant image signal portion is mirrored into the irrelevant area. In addition, the pseudo-signal portion can optionally be low-pass filtered to further smooth the transition, so that significant AC coefficients are prevented from occurring and the coding efficiency is further improved. The waveform of Fig.2E shows pseudo-pixels p[n] obtained by extrapolating the pixels x[n] of the relevant area into the irrelevant area.

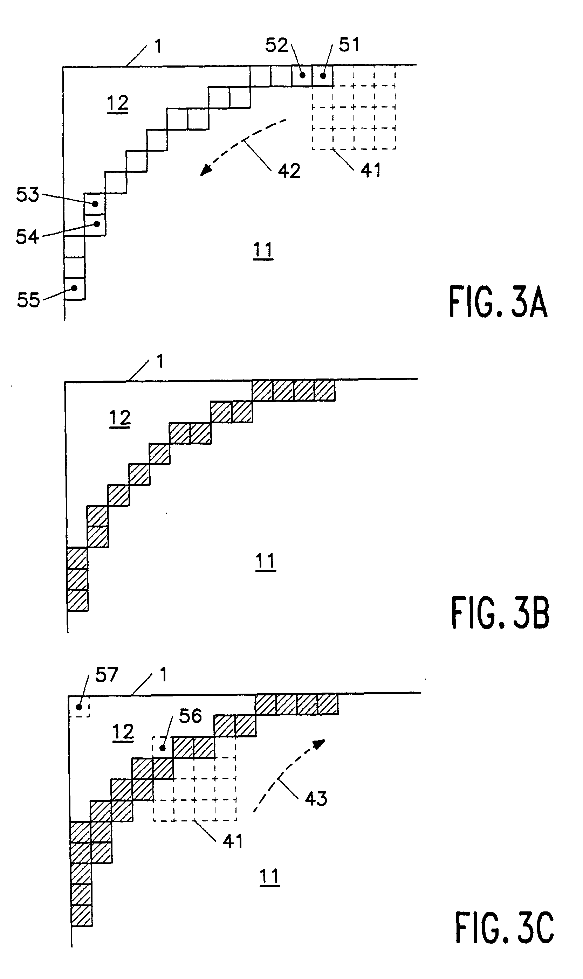

The extrapolation as shown in Fig.2E will now be described for the two-dimensional image space. In Figs. 3A-3C, the top-left corner of a rectangular image is shown. In Fig.3A, a pixel block **41** having an adequate size (here a 4*4 block is shown) is initially chosen to be such that the block includes a single irrelevant pixel **51** in the top left corner. The irrelevant pixel y[i,j] is then replaced by a pseudo-pixel p[i,j] having the average value of all other pixels in the block. In a mathematical notation, this is:

$$p[i,j] \;=\; \frac{1}{N^2-1} \sum_{n,m \neq 0,0} x[n,m]$$

in which n and m (n,m=0..N) denote pixel locations in the N*N block. The above operation is repeated for all irrelevant pixels y[i,j] along the boundary between relevant area **11** and irrelevant area **12** until the last irrelevant pixel **55** has been processed. Block **41** thus moves along the boundary as indicated by arrow **42.** While the block proceeds, it may include pseudo-pixels generated beforehand, as well as irrelevant pixels not yet replaced. When pixel **52** is being extrapolated, the block also includes pseudo-pixel **51.** When pixel **53** is being processed, the block also includes irrelevant pixel **54.** Pseudo-pixels are incorporated in the averaging step, irrelevant pixels are not.

Fig.3B shows the situation after all boundary pixels y[i,j] have been replaced by pseudo-pixels p[i,j] (shown shaded). The block then moves in a reverse direction along the new boundary thus created. Fig.3C shows the situation at a further stage of the process. Irrelevant pixel **56** is now being replaced by the average of pixels in block **41** and the block is now moving along the boundary as indicated by arrow **43.** As the extrapolation process proceeds, more pseudo-pixels will be included in block **41.** Eventually, the vertex **57** of the rectangular image is reached. By then, all pseudo-pixels will have obtained nearly the same value. Image area **12** can thus be encoded very efficiently. The extrapolated image area can be further smoothed by using a 2-dimensional low-pass filter. This smoothing ensures that the extrapolated area does not contain a significant amount of energy.

Reverting now to Fig.1, a method of decoding will be described. A conventional decoder **7** (e.g. a block-based transform decoder or DPCM decoder) carries out the inverse operation of encoder **5** at the transmitter end. Decoder **7** thus reconstructs the pixels as transmitted by the encoder. If they are displayed on the screen in an unaltered form, the pseudo-pixels will cause an image to appear, which the viewer (here a medical specialist) is not familiar with. A boundary decoder **8** receives the codewords B representing the boundary between relevant and pseudo-data. Alternatively, the boundaries are known in advance, in which case they are locally stored. The decoded pixels and boundary information are applied to a reconstruction circuit **9.** In response to the boundary information, the reconstruction circuit identifies which pixels are pseudo-pixels p[i,j] and which are relevant pixels x[i,j]. As will be appreciated in view of the foregoing description, the reconstruction circuit **9** does not affect pixels other than pseudo-pixels. The pseudo-image pixels are replaced by predetermined image data, e.g. black pixels. The image thus reconstructed exhibits the same sharp boundaries as the original image.

The conventional video encoder **5** (Fig.1) may be a block transform encoder. In that case, the video image is divided into image blocks which are subjected to a given orthogonal transform such as the well-known Discrete Cosine Transform. Most blocks will comprise relevant pixels only, others will comprise irrelevant pixels only, and so-called "mixed blocks" will comprise both relevant and irrelevant image data. The above-described replacement of irrelevant pixels by pseudo-pixels now needs to be applied to mixed blocks only. The blocks comprising irrelevant pixels only do not need to be transformed at all. They can either be ignored, or encoded into a single DC coefficient (preferably zero, e.g. black).

In summary, a method of encoding images including areas of relevant pixels and areas of irrelevant pixels (e.g. a background) is disclosed. The pixels of the irrelevant area are replaced by pixels smoothing the transition between said areas. The image thus obtained is subsequently subjected to conventional image coding which now yields considerably fewer bits. At the receiver end, the pseudo-pixels are replaced by predetermined background pixels to reconstruct the original boundaries. If the boundary between both areas is not known in advance, the boundary is detected, encoded and transmitted to the receiver. The invention is particularly applicable to compression of medical images having circular areas of interest, but may also be used to encode other video images having irrelevant areas such as videophone images in which a head-and-shoulder area constitutes relevant information only.

## Claims

1. A method of encoding images including areas (11) of relevant image data and areas (12) of irrelevant image data, comprising the step of identifying (2) said irrelevant image data, **characterized by** replacing (4) at least irrelevant image data next to a boundary (13) between said areas by pseudo-image data smoothing the transition between relevant and irrelevant image data.

2. A method as claimed in Claim 1, **characterized by** detecting (2) and encoding (3) the boundary between said areas.

3. An encoder for encoding images including areas (11) of relevant image data and areas (12) of irrelevant image data, comprising means (2) for identifying said irrelevant image data, **characterized by** means (4) for replacing at least irrelevant image data next to a boundary (13) between said areas by pseudo-image data smoothing the transition between relevant and irrelevant image data.

4. An encoder as claimed in Claim 3, **characterized by** means (2) for detecting and means (3) for encoding the boundary between said areas.

5. A method of decoding images including areas (11) of relevant image data and areas (12) of irrelevant image data, **characterized by** identifying (8) pseudo-image data in response to boundary information and replacing (9) said pseudo-image data by predetermined image data.

6. A method as claimed in Claim 5, **characterized by** receiving (8) encoded boundary information and decoding (8) said boundary information.

7. A decoder for decoding images including areas (11) of relevant image data and areas (12) of irrelevant image data, **characterized by** means (8) for identifying pseudo-image data in response to boundary information and means (9) for replacing said pseudo-image data by predetermined image data.

8. A decoder as claimed in Claim 7, **characterized by** means (8) for receiving encoded boundary information and means (8) for decoding said boundary information.

9. An encoded image signal representing an image including areas of relevant image data and areas of irrelevant image data, **characterized in that** at least irrelevant image data next to a boundary (13) between said areas has been replaced by pseudo-image data smoothing the transition between relevant and irrelevant image data.

10. An image signal as claimed in Claim 9, further including boundary information (B) defining the boundary between said areas.

11. A digital storage medium (6) on which a signal as claimed in Claim 9 or 10 is stored.

## Patentansprüche

1. Verfahren zum Codieren von Bildern mit Gebieten (11) relevanter Bilddaten und mit Gebieten (12) nicht relevanter Bilddaten, wobei dieses Verfahren den Verfahrensschritt der Identifizierung (2) der genannten nicht relevanten Bilddaten umfasst, **dadurch gekennzeichnet, dass** wenigstens nicht relevante Bilddaten in der Nähe einer Grenze (13) zwischen den genannten Gebieten durch Pseudobilddaten ersetzt werden (4), die den Übergang zwischen relevanten und nicht relevanten Bilddaten glätten.

2. Verfahren nach Anspruch 1, **gekennzeichnet**

**durch** Detektion (2) und Codierung (3) der Grenze zwischen den genannten Gebieten.

3. Codierer zum Codieren von Bildern mit Gebieten (11) relevanter Bilddaten und Gebieten (12) nicht relevanter Bilddaten, mit Mitteln (2) zum Identifizieren der genannten nicht relevanten Bilddaten, **gekennzeichnet durch** Mittel (4) zum Ersetzen wenigstens nicht relevanter Bilddaten in der Nähe einer Grenze (13) zwischen den genannten Gebieten **durch** Pseudobilddaten, die den Übergang zwischen relevanten und nicht relevanten Bilddaten glätten.

4. Codierer nach Anspruch 3, **gekennzeichnet durch** Mittel (2) zum Detektieren und **durch** Mittel (3) zum Codieren der Grenze zwischen den genannten Gebieten.

5. Verfahren zum Decodieren von Bildern mit Gebieten (11) relevanter Bilddaten und Gebieten (12) nicht relevanter Bilddaten, **gekennzeichnet durch** das Identifizieren (8) von Pseudobilddaten in Reaktion auf Grenzeninformation und **durch** Ersetzen (9) der genannten Pseudobilddaten **durch** vorbestimmte Bilddaten.

6. Verfahren nach Anspruch 5, **gekennzeichnet durch** den Empfang (8) codierter Grenzeninformation und **durch** Decodierung (8) der genannten Grenzeninformation.

7. Decoder zum decodieren von Bildern mit Gebieten (11) relevanter Bilddaten und Gebieten (12) nicht relevanter Bilddaten, **gekennzeichnet durch** Mittel (8) zum Identifizieren von Pseudobilddaten in Reaktion auf Grenzeninformation und **durch** Mittel (9) zum Ersetzen der genannten Pseudobilddaten **durch** vorbestimmte Bilddaten.

8. Decoder nach Anspruch 7, **gekennzeichnet durch** Mittel (8) zum Empfangen codierter Grenzeninformation und **durch** Mittel (8) zum Decodieren der genannten Grenzeninformation.

9. Codiertes Bildsignal, das ein Bild mit Gebieten relevanter Bilddaten und mit Gebieten nicht relevanter Bilddaten darstellt, **dadurch gekennzeichnet, dass** wenigstens nicht relevante Bilddaten in der Nähe einer Grenze (13) zwischen den genannten Gebieten durch Pseudobilddaten ersetzt worden sind, die den Übergang zwischen relevanten und nicht relevanten Bilddaten glätten.

10. Bildsignal nach Anspruch 9, weiterhin mit Grenzeninformation (B), welche die Grenze zwischen den genannten Gebieten definiert.

11. Digitales Speichermedium (6), auf dem ein Signal nach Anspruch 9 oder 10 gespeichert ist.

**Revendications**

1. Procédé de codage d'images renfermant des surfaces (11) de données d'image significatives et des surfaces (12) de données d'image non significatives, comprenant l'étape d'identification (2) desdites données d'image non significatives, **caractérisé par** le remplacement (4) d'au moins de données d'image non significatives présentes à côté d'une limite (13) entre lesdites surfaces par des données de pseudo-image lissant la transition entre des données d'image significatives et des données d'image non significatives.

2. Procédé selon la revendication 1, **caractérisé par** la détection (2) et par le codage (3) de la limite entre lesdites surfaces.

3. Codeur pour coder des images renfermant des surfaces (11) de données d'image significatives et des surfaces (12) de données d'image non significatives, comportant des moyens (2) pour identifier lesdites données d'image non significatives, **caractérisé par** des moyens (4) pour remplacer au moins des données d'image non significatives présentes à côté d'une limite (13) entre lesdites surfaces par des données de pseudo-image lissant la transition entre des données d'image significatives et non significatives.

4. Codeur selon la revendication 3, **caractérisé par** des moyens (2) pour détecter et par des moyens (3) pour coder la limite entre lesdites surfaces.

5. Procédé de décodage d'images renfermant des surfaces (11) de données d'image significatives et des surfaces (12) de données d'image non significatives, **caractérisé par** l'identification (8) de données de pseudo-image en réponse à de l'information limite et par le remplacement (9) desdites données de pseudo-image par des données d'image prédéterminées.

6. Procédé selon la revendication 5, **caractérisé par** la réception (8) d'information limite codée et par le décodage (8) de ladite information limite.

7. Décodeur pour décoder des images renfermant des surfaces (11) de données d'image significatives et des surfaces (12) de données d'image non significatives, **caractérisé par** des moyens (8) pour identifier des données de pseudo-image en réponse à de l'information limite et par des moyens (9) pour remplacer lesdites données de pseudo-image par des données d'image prédéterminées.

8. Décodeur selon la revendication 7, **caractérisé par** des moyens (8) pour recevoir de l'information limite codée et par des moyens (8) pour décoder ladite information limite.

9. Signal d'image codé représentant une image renfermant des surfaces de données d'image significatives et des surfaces de données d'image non significatives, **caractérisé en ce qu'**au moins des données d'image non significatives présentes à côté d'une limite (13) entre lesdites surfaces ont été remplacées par des données de pseudo-image lissant la transition entre des données d'image significatives et des données d'image non significatives.

10. Signal d'image selon la revendication 9, renfermant encore de l'information limite (B) définissant la limite entre lesdites surfaces.

11. Milieu de stockage numérique (6) sur lequel est stocké un signal selon la revendication 9 ou 10.

FIG. 1

y[n]

FIG. 2A

FIG. 2B

FIG. 2C

FIG. 2D

FIG. 2E

p[n]   x[n]

7

FIG. 3A

FIG. 3B

FIG. 3C